# EUROPEAN PATENT APPLICATION

(11) **EP 1 922 932 A2**
(43) Date of publication of application: **21.05.2008**
(21) Application number: 07021629.6
(22) Date of filing: 07.11.2007
(51) Int. Cl.: A21C 7/04

(54) **Rounding machine particulary for pieces of bread dough and the like**

(30) Priority: 20.11.2006 IT MI20062222
(71) Applicant: Bertuetti S.P.A., 25030 Torbole Casaglia (Brescia) (IT)
(72) Inventor: Forbice, Enrico, 25030 Pompiano ( Prov. of Brescia ) (IT)
(74) Representative: Alagem Modiano, Lara S.

(57) **Abstract**

A rounding machine (1) particularly for pieces of bread dough and the like, comprising a conveyor for pieces of bread dough above which it is possible to arrange a rounding assembly (10) which has at least one shaping element (20) which can engage the corresponding piece of dough, the machine further comprising means (21-26) for moving the shaping element (20) along a predominantly circular path which act on a central portion of the rounding assembly (10) above the conveyor.

## Description

The present invention relates to a rounding machine, particularly for pieces of bread dough and the like.

As is known, especially in breadmaking, devices are used which are designed to round, by giving them substantially a ball-like shape, the pieces of bread dough cut from a layer of dough which arrives from the mixing machine.

Such devices, which generally reproduce the manual circular movement that is performed to make a mass of dough assume a basically spherical shape, are structured so as to have a plurality of shaping elements, generally constituted by cups, below which the piece of dough is arranged, such piece of dough being worked by imparting a cyclic circular movement to the several cups.

This embodiment suffers some drawbacks, the first of which consists in that it is necessary to provide a particularly complex mechanism to provide the circular motion, with difficulties in manufacture and with limited efficiency in many cases.

Another problem further consists in that the cups must be sized individually according to the size of the piece of bread dough, and therefore many difficulties are encountered if the size of the piece of bread dough changes, and therefore the cups may not be able to provide optimum shaping.

The aim of the invention is to solve the problems described above by providing a rounding machine, particularly for pieces of bread dough and the like, which allows to simplify considerably all the steps for the movement of the shaping elements, further obtaining high uniformity in processing.

Within this aim, an object of the invention is to provide a machine which can adapt automatically to the different dimensions of the pieces of bread dough and the like, always ensuring optimum processing.

Another object of the present invention is to provide a rounding machine particularly for pieces of bread dough and the like which thanks to its particular constructive characteristics is capable of giving the greatest assurances of reliability and safety in use.

Still another object of the present invention is to provide a rounding machine particularly for pieces of bread dough and the like which can be easily obtained starting from commonly commercially available elements and materials and is also competitive from a merely economical standpoint.

This aim and these and other objects which will become better apparent hereinafter are achieved by a rounding machine particularly for pieces of bread dough and the like according to the invention, comprising a conveyor for pieces of bread dough above which it is possible to arrange a rounding assembly which has at least one shaping element which can engage the corresponding piece of dough, characterized in that it comprises means for moving said at least one shaping element along a predominantly circular path which act on a central portion of said rounding assembly above said conveyor.

Further characteristics and advantages of the present invention will become better apparent from the description of a preferred but not exclusive embodiment of a rounding machine particularly for pieces of bread dough and the like, illustrated by way of non-limiting example in the accompanying drawings, wherein:

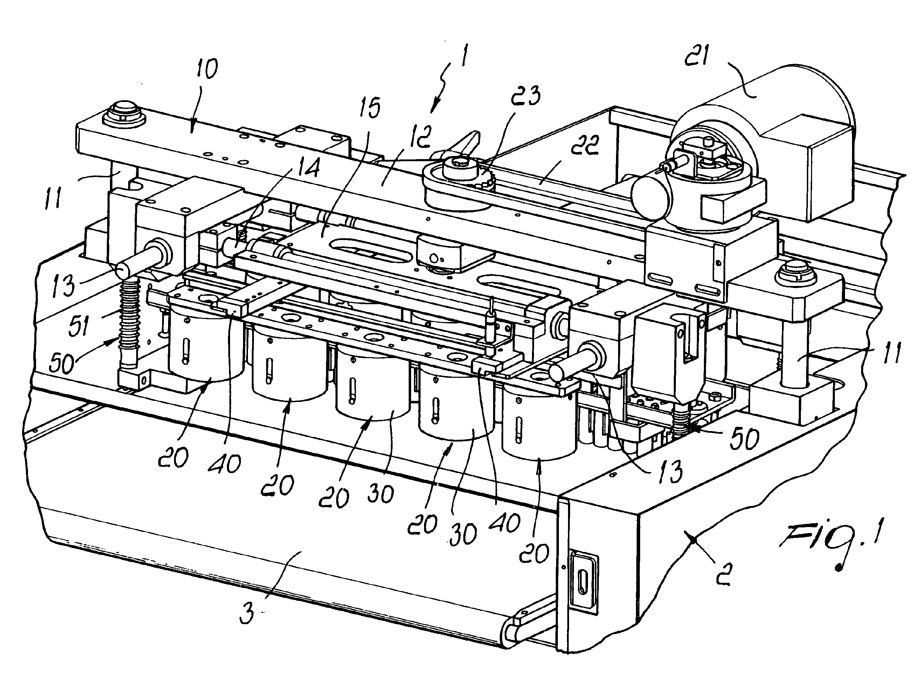

Figure 1 is a schematic perspective view of the rounding machine particularly for bread dough and the like;

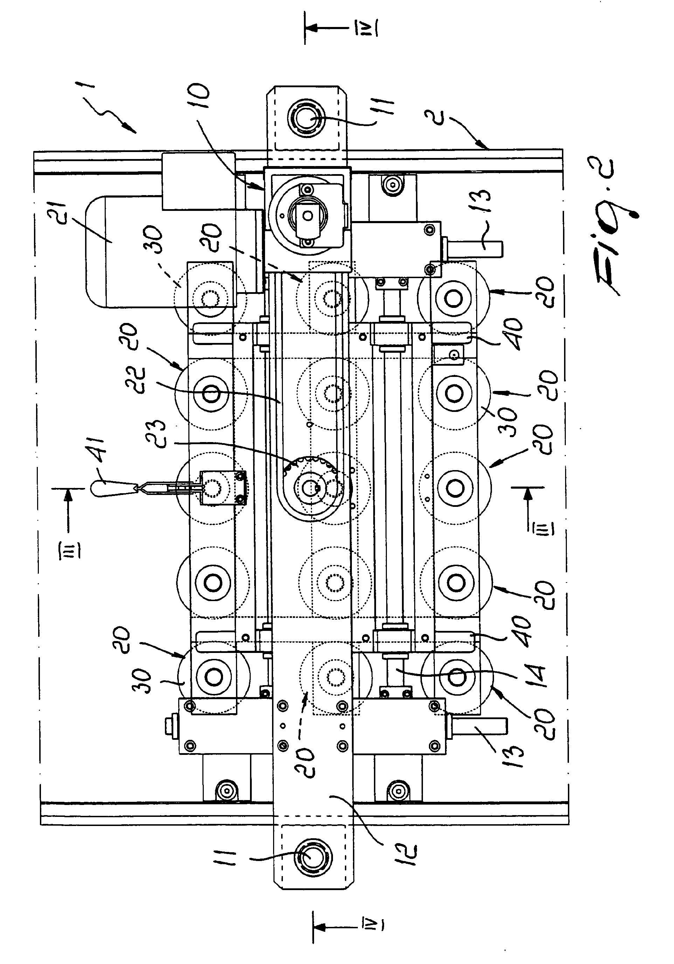

Figure 2 is a top plan view of the machine;

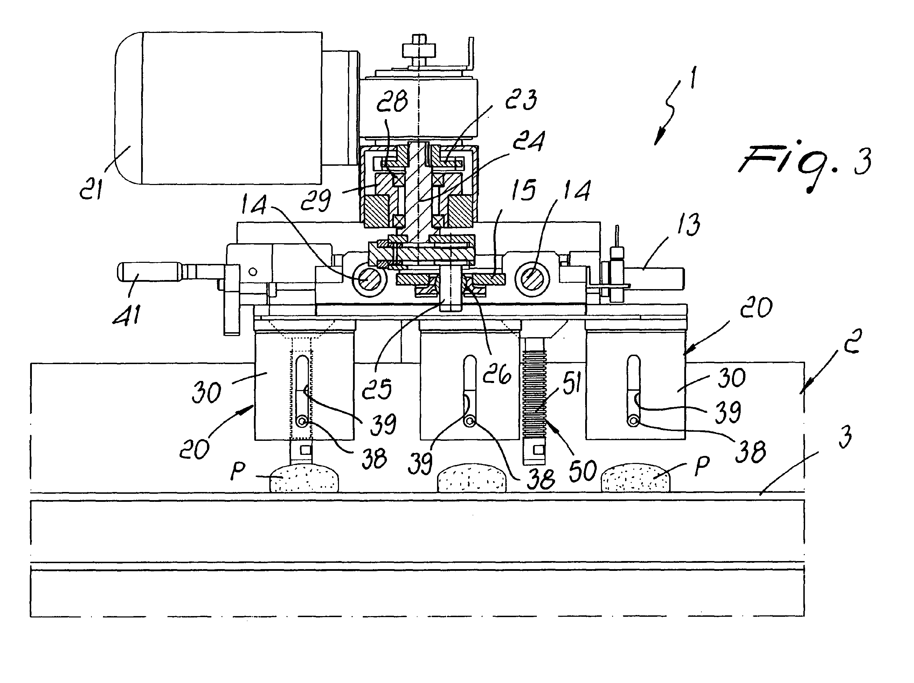

Figure 3 is a sectional view, taken along the line III-III of Figure 2;

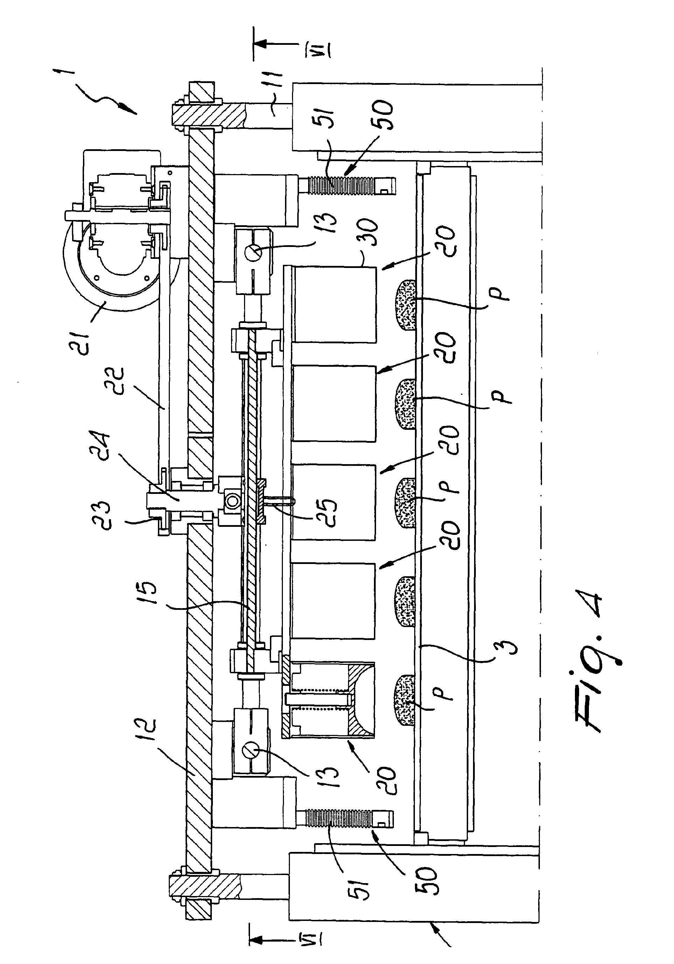

Figure 4 is a sectional view, taken along the line IV-IV of Figure 2;

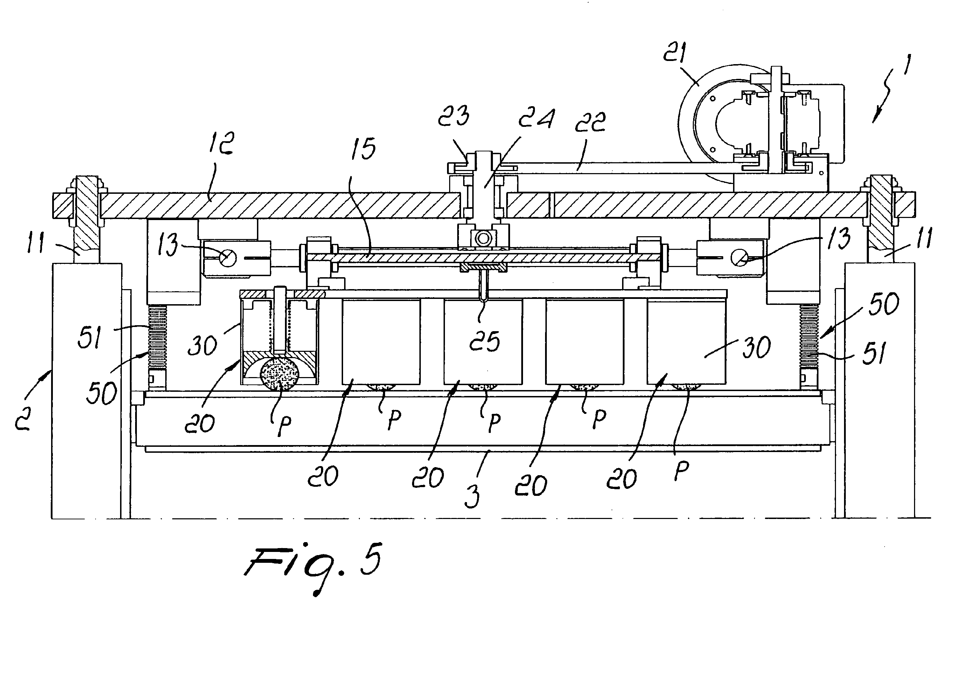

Figure 5 is a sectional view of the machine in the working position;

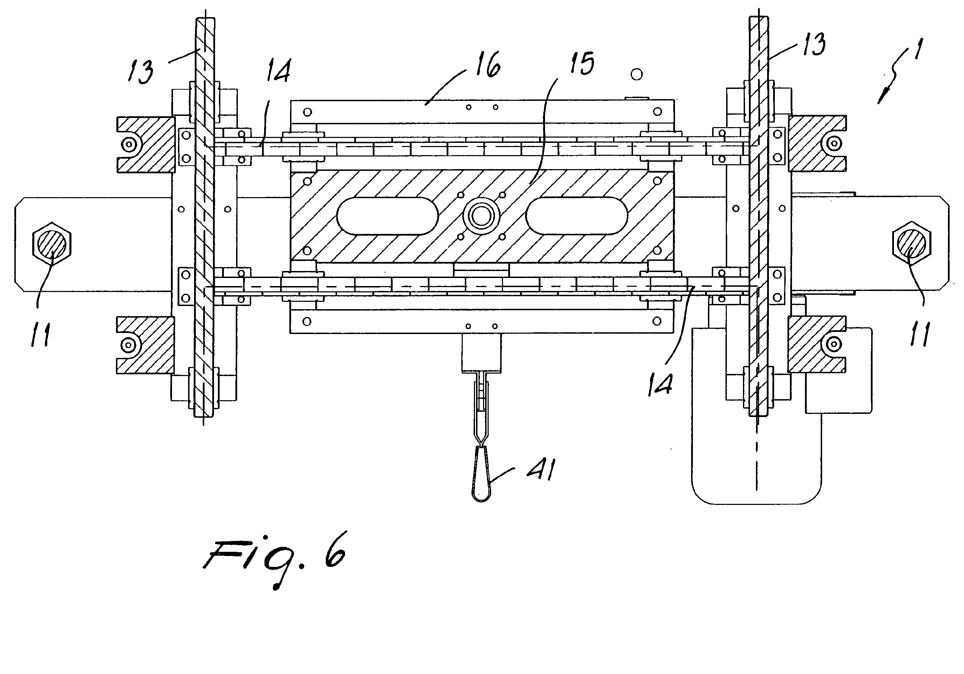

Figure 6 is a sectional view, taken along the line VI-VI of Figure 4;

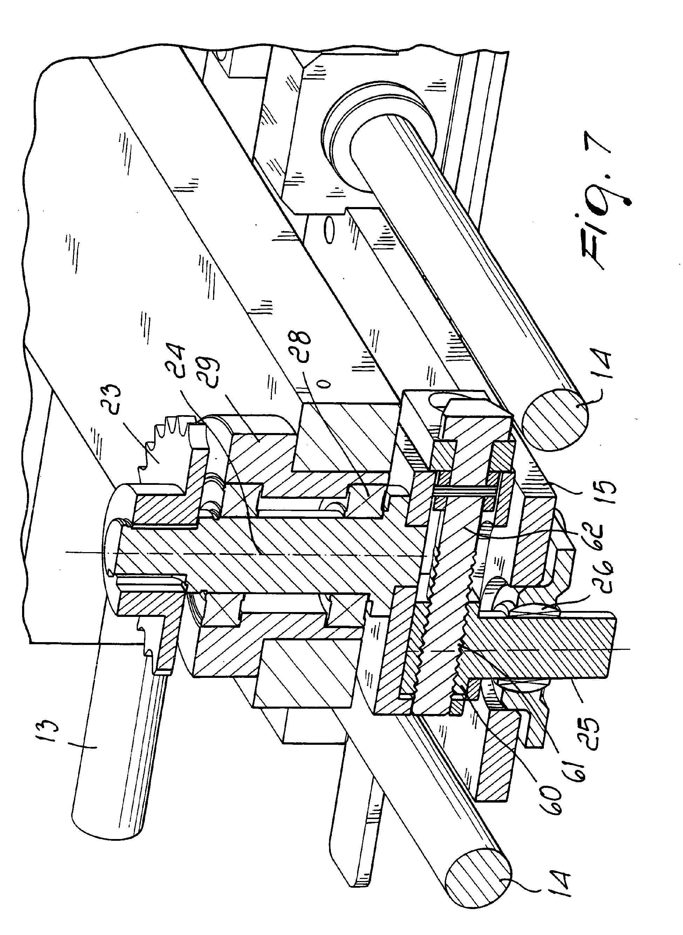

Figure 7 is a sectional view, taken along a vertical plane, of the means for moving the shaping element;

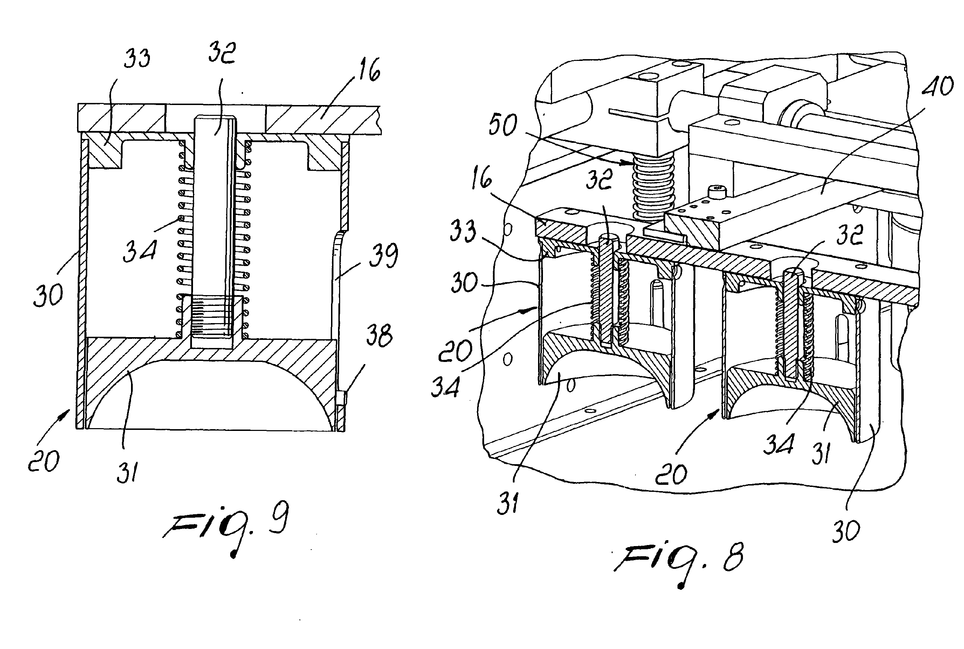

Figure 8 is a schematic sectional view of the detail of the shaping elements;
Figure 9 is a sectional view of a shaping element.

With reference to the figures, the rounding machine particularly for pieces of bread dough and the like, according to the invention, generally designated by the reference numeral 1, defines a supporting frame 2 on which there is a conveyor of pieces of dough which is advantageously provided by means of a belt 3.

Above the belt 3 there is a rounding assembly, generally designated by the reference numeral 10, which is generally constituted by vertical supporting columns 11 which are interconnected by a beam 12 which lies at right angles to the direction of translational motion of the belt 3.

The beam 12 supports longitudinal guides 13 which extend in the belt advancement direction and in turn support transverse guides 14 which are perpendicular to the guides 13 and slidingly support a slider plate 15, to which it is possible to connect detachably a frame 16 on which there is at least one and preferably a plurality of shaping elements 20 which are preferably arranged in rows and columns.

A peculiar feature of the invention resides in that movement means are provided in order to subject to a predominantly circular movement the several shaping elements. The movement means are constituted by a motor 21, which by means of a belt or chain 22 turns a pinion 23 which is keyed on a vertical shaft 24 which is arranged substantially in a central portion of the rounding assembly above the conveyor belt.

The vertical shaft 24 is connected to an eccentric pivot 25, which by means of bearings 26 engages the slider plate 15, which is subjected to an oscillation movement both along the longitudinal direction and along the transverse direction, so as to make the several shaping elements 20 move along a predominantly circular path.

Advantageously, it is possible to vary the movement by way of simple means by varying the eccentricity of the eccentric pivot 25 by way of eccentricity variation means.

For this purpose, the pivot 25 has an upper head 60, which defines a threaded seat 61 in which a threaded adjustment pivot 62 engages, said pivot being supported at the base of the shaft 24, being retained in translational motion and imparting, when turned, a translational motion to the pivot 25, which is also prevented from rotating, along a radial direction with respect to the shaft 24.

The variation of the eccentricity of the pivot 25 causes a different circular movement of the slider plate 15.

The described arrangement allows to simplify the actuation means, since there is only the motor which drives the shaft 24 which, by means of the rolling bearings 28, rotatably engages a bush 29 which is connected to the beam 12.

Another fundamental aspect of the invention consists in that the several shaping elements 20 are constituted by an outer cylindrical wall 30, inside which there is a contoured plate 31 connected to an axial stem 32, which can slide with respect to the bottom 33 of the rounding element which is supported by the frame 16.

There is also a contrast spring 34, which acts between the bottom and the plate so as to adjust the thrust applied to the plate which, depending on the size of the piece of dough P being processed, can perform a translational motion, increasing in practice the useful processing space which is defined by the shaping element.

The possibility of translational motion of the plate 31 is limited by the presence of a stroke limiter 38 which is connected peripherally to the plate and can slide within a slot 39 which extends parallel to the stem 32.

The frame 16 can be connected detachably to guiding sliders 40 which are connected to the slider plate 15, allowing to insert, in practice with a slider-like movement, the frame 16 with the possibility to lock it by means of a locking lever 41 provided on the rounding assembly.

The rounding assembly is further provided with supporting pads, designated by the reference numeral 50, which can slide in contrast with shock-absorbing springs 51, which are designed to rest on the belt 3, keeping it stably motionless during the processing step, in which the rounding assembly is made to perform a translational motion at right angles to the plane of arrangement defined by the belt 3 so as to move the several shaping elements to work on the pieces of dough P, which are provided on the belt and are arranged so as to match the several shaping elements.

In practical operation, the belt 3 is subjected to a stepwise movement, moving in succession the several pieces of dough at the rounding elements, so as to subject them to processing, and after the rise of the rounding assembly the belt is made to advance so as to move new pieces of dough below the shaping elements.

From what has been described above it is evident that the invention achieves the proposed aim and objects and in particular the fact is stressed that a machine is provided in which the movement means do not cause manufacturing problems, since they are positioned centrally and the corresponding motor is supported directly by the rounding assembly.

This type of connection allows to vary the movement simply by varying the eccentricity of the pivot 25 with respect to the shaft 24.

Another important aspect is further constituted by the particular embodiment of the shaping elements, which by having a plate which can perform a translational motion in contrast with a contrast spring, can create in practice a space for working on the piece of dough which changes volume, consequently adapting to any differences in the amount of dough that constitute each piece to be shaped.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2006A002222 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A rounding machine particularly for pieces of bread dough and the like, comprising a conveyor for pieces of bread dough above which it is possible to arrange a rounding assembly which has at least one shaping element which can engage the corresponding piece of dough, **characterized in that** it comprises means for moving said at least one shaping element along a predominantly circular path which act on a central portion of said rounding assembly above said conveyor.

2. The machine according to claim 1, **characterized in that** said rounding assembly comprises vertical supporting columns which are interconnected by a beam which lies substantially at right angles with respect to the direction of translational motion of said conveyor, said beam supporting longitudinal guides which are substantially parallel to the advancement direction of said conveyor, said longitudinal guides supporting transverse guides which are substantially perpendicular to said longitudinal guides, a slider plate being provided on said transverse guides and supporting said at least one shaping element.

3. The machine according to the preceding claims, **characterized in that** it comprises a frame which supports a plurality of shaping elements.

4. The machine according to one or more of the preceding claims, **characterized in that** said movement means comprise a motor which is supported by said beam and is functionally connected to a pinion which is keyed onto a vertical shaft which is arranged in a central portion of said rounding assembly above said conveyor.

5. The machine according to one or more of the preceding claims, **characterized in that** it comprises an eccentric pivot which is supported by said vertical shaft and can engage said slider plate, which can move longitudinally and transversely to said belt.

6. The machine according to one or more of the preceding claims, **characterized in that** it comprises means for varying the eccentricity of said eccentric pivot.

7. The machine according to one or more of the preceding claims, **characterized in that** said means for varying the eccentricity comprise a threaded seat which is defined transversely at the end of said eccentric pivot, a threaded adjustment pivot engaging in said threaded seat and being supported at the base of said vertical shaft and prevented from performing a translational motion, said eccentric pivot being prevented from rotating about its own axis and being able to perform a radial translational motion with respect to said vertical shaft.

8. A rounding machine particularly for pieces of bread dough and the like, comprising a conveyor for pieces of bread dough above which it is possible to arrange a rounding assembly which has at least one shaping element which can engage the corresponding piece of dough, **characterized in that** said shaping element comprises an outer cylindrical side wall which supports a contoured plate which can perform a translational motion in order to vary the compartment for engaging said piece of dough.

9. The machine according to claim 8, **characterized in that** it comprises an axial stem which supports said contoured plate and can engage slidingly a bottom which is arranged at the base of said outer cylindrical side wall.

10. The machine according to one or more of the preceding claims, **characterized in that** it comprises a contrast spring which acts between said bottom and said plate.

11. The machine according to one or more of the preceding claims, **characterized in that** it comprises a stroke limiter which is connected peripherally to said plate and can engage slidingly a slot which lies along said side wall in a direction which is substantially parallel to said stem.

12. The machine according to one or more of the preceding claims, **characterized in that** it comprises a frame for supporting said plurality of shaping elements which can be associated detachably with guiding sliders which are defined by said slider plate.

13. The machine according to one or more of the preceding claims, **characterized in that** it comprises a locking lever for detachably fixing said frame.

14. The machine according to one or more of the preceding claims, **characterized in that** it comprises supporting pads which are associated with said rounding assembly and can slide in contrast with, and by way of the action of, shock-absorbing springs, said supporting pads being adapted to rest on said belt upon the translational motion of said rounding assembly along a direction which is substantially perpendicular to the plane of arrangement of said belt.
